# EUROPÄISCHE PATENTSCHRIFT

(11) **EP 2 953 840 B1**
(45) Veröffentlichungstag und Bekanntmachung des Hinweises auf die Patenterteilung: **17.01.2018**
(21) Anmeldenummer: 13766483.5
(22) Anmeldetag: 11.09.2013
(51) Int. Cl.: B62D 21/10, B62D 21/16, B62D 63/02

(54) **FAHRGESTELL**
VEHICLE CHASSIS
CHÂSSIS DE VÉHICULE

(30) Priorität: 07.02.2013 DE 202013100573 U
(43) Veröffentlichungstag der Anmeldung: 16.12.2015
(73) Patentinhaber: Alois Kober GmbH, 89359 Kötz (DE)
(72) Erfinder: LEHNER, Helmut, 89359 Kötz (DE); WILHELM, Klaus, 89423 Gundelfingen (DE); HILDENSPERGER, Wolfgang, 89343 Jettingen-Scheppach (DE); STÖTTER, Stephan, 86163 Augsburg (DE); UHL, Stefan, 89312 Günzburg (DE); ECKLE, Volker, 89183 Holzkirch (DE)
(74) Vertreter: Ernicke, Klaus Stefan
(86) Internationale Anmeldenummer: PCT/EP2013/068840
(87) Internationale Veröffentlichungsnummer: WO 2014/121856

(56) Entgegenhaltungen:
- WO-A1-00/37301
- US-A- 4 318 549
- US-A1- 2004 119 276

## Beschreibung

Die Erfindung betrifft ein Fahrgestell mit den Merkmalen im Oberbegriff des Hauptanspruchs. Die US 2004/0119276 A1 offenbart ein solches Fahrgestell. Aus der EP 2 423 077 A2 ist ein Anbau-Fahrgestelle für Zugköpfe bekannt, das aus einem niedrigen Leiterrahmen mit Längs- und Querträgern aus Stahl besteht, welcher Aufbauaggregate, z.B. eine Heizung sowie Frisch- und Abwassertanks und auch ein hinteres Achsaggregat aufnimmt. Die statischen und dynamischen Belastungen im Stand und im Fahrbetrieb werden vom Leiterrahmen und von den strukturverstärkend ausgebildeten Aufbauaggregaten aufgenommen.

Zugköpfe und andere Anbau-Fahrgestelle sind aus der DE 37 21 189 A1, WO 00/37301 A1 und EP 1 634 798 A1 bekannt.

Die DE 41 33 401 A1 zeigt ein Wohnmobil mit einem Zugkopf und einer selbstragenden Wohnkabine nebst Hinterachse, die im unteren Bodenbereich große Stauräume mit seitlichen und axialen Zugängen sowie Durchlademöglichkeit aufweist. Die tragende Struktur wird von rechteckigen gestreckten Hohlkörpern oder nach oben offenen U-Profilen gebildet.

Es ist Aufgabe der vorliegenden Erfindung, ein verbessertes Fahrgestell aufzuzeigen.

Die Erfindung löst diese Aufgabe mit den Merkmalen im Hauptanspruch.

Die selbsttragende Moduleinheit mit der als Plattformverbund ausgebildeten Verbundkonstruktion hat den Vorteil einer hohen Steifigkeit und bietet anderseits viel Raum und Gestaltungsmöglichkeiten für die Bildung von einer oder mehreren integrierten Hohlkammern. Eine Hohlkammeranordnung kann unterschiedlichen Zwecken dienen und neben einer Staufunktion auch Unterbringungsmöglichkeiten für Aufbauaggregat bieten.

Die Moduleinheit kann insbesondere einen im Fahrgestell integrierten Doppelboden für den Aufbau des Fahrzeugs, z.B. einen Wohnmobilaufbau, einen Kastenaufbau eines Verkaufs- oder Präsentationsfahrzeugs oder dgl. bieten. Der Doppelboden kann auch thermisch isoliert sein. Die Moduleinheit kann Stütz- und Tragfunktion für den Aufbau übernehmen. Der Aufbau muss nicht selbsttragend sein und kann filigran und leichtgewichtig ausgebildet sein.

Die beanspruchte Moduleinheit bietet verbesserte kombinative Nutzungsmöglichkeiten und hat außerdem den Vorteil einer Leichtbaukonstruktion mit wesentlichen Gewichtsvorteilen gegenüber vorbekannten Fahrgestellen. Die Nutzlast des Fahrzeugs kann dadurch erhöht werden. Außerdem kann der bei vorbekannten Leiterrahmen bestehende Totraum entfallen.

Die Stabilität des Plattformverbundes kommt vornehmlich aus einer oberen und einer unteren Plattform, die durch Längsträger der Moduleinheit distanziert und zugleich versteift werden. Die Längsträger können durch einen oder mehrere Querträger ergänzt werden. Die Längs- und Querträger benötigen wenig Platz und schränken die für die Hohlkammer(n) verfügbaren Volumina nur geringfügig ein. Durch Stegöffnungen sind Zugänge oder Durchgangsöffnungen im Hohlkammerbereich möglich, die eine maximale Hohlraumausnutzung bei Erhalt der Stabilität ermöglichen.

Für die Fahrstabilität sind Längsträger der beanspruchten Art besonders vorteilhaft, insbesondere wenn hierüber auch der Anschluss an Längsträger des Zugkopfes erfolgt. Es kann auf Erfahrungen und Teile aus dem Fahrwerksbau zurückgegriffen werden. Zudem ergeben sich bautechnische und wirtschaftliche Vorteile. Die Längsträger können eine Mehrfachfunktion als Abstandshalter und Verbinder im Plattformverbund und als tragendes Fahrgestell- und Fahrwerksteil haben.

Vorteilhaft ist auch die direkte Anbaumöglichkeit einer Achsanordnung direkt an den Längsträgern der Moduleinheit. Dies ermöglicht einen nachträglichen Wechsel der Achsanordnung und gibt eine große Gestaltungsfreiheit für unterschiedliche Achsanordnungen und Anbausituationen. Eine Achsanordnung kann als Einzelachse, Tandemachse oder Trippelachse ausgeführt sein. Sie kann an eine Tieferlegung des Anbau-Fahrgestells adaptiert sein. Die Moduleinheit und die Verbundkonstruktion können entsprechend variiert und angepasst werden.

Das beanspruchte Fahrgestell, insbesondere Anbau-Fahrgestell, kann eine oder mehrere Hohlkammern mit einer beträchtlichen Höhe beinhalten. Die Längs- und Querträgerhöhe ist entsprechend vergrößert. Sie kann insbesondere größer als die Höhe der zugkopfseitigen Längsträger sein. Gegenüber vorbekannten Fahrgestellen ergeben sich dadurch größere Hohlkammern und bessere Nutzungsmöglichkeiten, wobei durch Integration ohnehin vorhandener Fahrwerksteile der Bauaufwand und das Gewicht verringert werden können. Auch die Gestaltungsfreiheiten zur Aufteilung und Unterteilung der ein oder mehreren Hohlkammern sind deutlich verbessert.

Das beanspruchte Fahrgestell kann alternativ für ein anderes Landfahrzeug, z.B. für einen Anhänger, insbesondere einen Caravan, eingesetzt werden.

Das beanspruchte Fahrgestell kann auch als komplettes Fahrgestell eines Nutzfahrzeugs ausgebildet sein und das Vorderachsaggregat sowie Motor und Getriebe und die Frontteile des Fahrzeugs aufnehmen. Die Längsträger eines Plattformverbunds können hierfür entsprechend nach vorn verlängert sein und über die Plattform(en) hinaus frontseitig überstehen.

Bei dem beanspruchten Plattformverbund mit Längs- und Querträgern können die Querträger zwischen den Längsträgern angeordnet und als Trägerstummel ausgebildet sein. Andererseits ist eine Gestaltung als durchgehende Querträger mit großen Stegöffnungen möglich. Die Längs- und Querträger können ferner im wesentlichen die gleiche Höhe aufweisen. Diese Varianten verbessern Größe, Zugänglichkeit und Nutzbarkeit des integrierten Hohlraums. In einer anderen Variante können die Querträger eine zumindest partielle Hohlkammertrennung bilden.

Die Längs- und Querträger können als Platten oder als Profile mit einem aufrechten Trägersteg und einem Quergurt am unteren und/oder oberer Stegrand ausgebildet sein. Sie können insbesondere als L-, C- oder Z-förmige profilierte Metallbleche, bevorzugt Blechbiegeteile, ausgebildet sein. Die Längsträger können ferner abgewinkelte Stützbeschläge zur Befestigung einer Plattform aufweisen.

Die Längsträger einer Moduleinheit können in Fahrtrichtung sich erstreckende profilierte Montagebeschläge aufweisen, die zur bevorzugt formschlüssigen Verbindung mit Längsträgern eines Zugkopfs vorgesehen und adaptiert sind. Die Längsträger der Moduleinheit können dabei eine größere Steghöhe als die Längsträger des Zugkopfs aufweisen. Die Montagebeschläge können in einer der gewünschten Fahrgestellhöhe entsprechenden Lage angeordnet sein.

Die seitlichen Überstände der Plattformen können eine Ausnehmung, insbesondere einen Radausschnitt, aufweisen. Die untere Plattform kann getrennte Plattformbereiche mit einem Zwischenraum zur Aufnahme einer Achsanordnung aufweisen.

Die Plattform(en) können als formsteife Platten mit einem isolierenden Material, insbesondere als Sandwichplatten, ausgebildet sein. Die untere Plattform kann ferner an der Unterseite eine Schutzschicht aufweisen.

In den Unteransprüchen sind weitere vorteilhafte Ausgestaltungen der Erfindung angegeben.

Die Erfindung ist in der Zeichnung beispielhaft und schematisch dargestellt. Im einzelnen zeigen:
- Figur 1:: eine Seitenansicht eines Fahrzeugs mit einem Zugkopf und einem angebauten Fahrgestell mit einer selbsttragenden Moduleinheit,
- Figur 2:: eine Draufsicht des Fahrzeugs von Figur 1 ohne Aufbau mit Blick auf die obere Plattform,
- Figur 3:: eine perspektivische Ansicht des Fahrzeugs von Figur 1 ohne Aufbau und
- Figur 4:: eine Draufsicht des Fahrzeugs von Figur 1 ohne obere Plattform.

Die Erfindung betrifft ein Fahrgestell (2) für ein Landfahrzeug (1) sowie ein mit einem solchen Fahrgestell (2) ausgerüstetes Landfahrzeug (1) und ein Herstellverfahren. Das Landfahrzeug (1) ist als Straßenfahrzeug ausgebildet. Es kann insbesondere als Nutzfahrzeug eingesetzt werden.

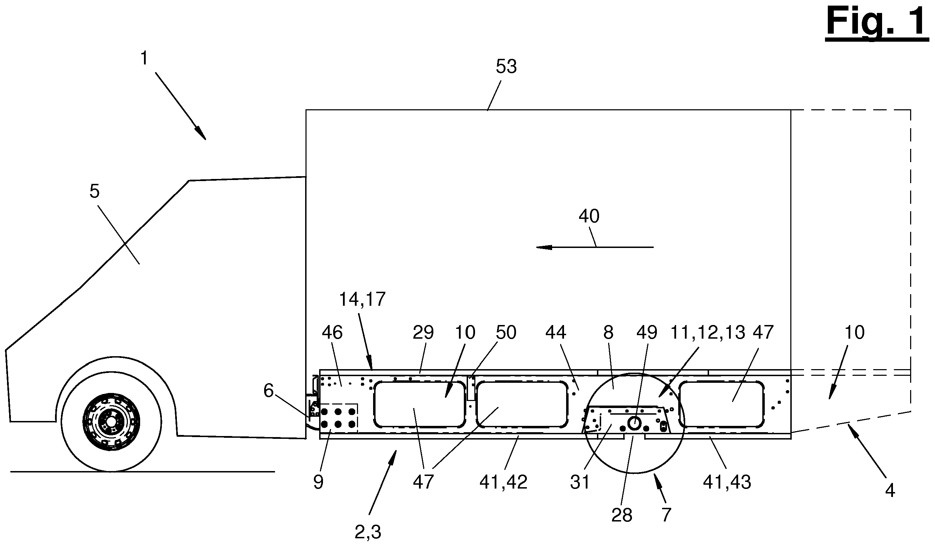

Figur 1 bis 4 zeigen ein Landfahrzeug (1) mit einem Fahrgestell (2). Das Fahrgestell (2) weist eine Fahrwerkskomponente auf, die als selbsttragende Moduleinheit (3) ausgebildet ist. Die Moduleinheit (3) besteht aus einer Verbundkonstruktion (14) und einer oder mehreren hierin integrierten Hohlkammern (10,11,12,13). Die Verbundkonstruktion (14) ist als Plattformverbund (17) ausgeführt.

Das Fahrgestell (2) kann nur die eine Fahrgestellkomponente und die Moduleinheit (3) aufweisen. Es kann alternativ mehrteilig sein und eine oder mehrere weitere Fahrgestellkomponenten (4) besitzen. Eine solche ist z.B. gemäß Figur 1 als Heckrahmen (4) ausgebildet, welcher an die Moduleinheit (3) angebaut oder in die Moduleinheit (3) integriert sein kann. Die Fahrgestellkomponenten (3,4) sind in Fahrtrichtung bzw. in Fahrzeuglängsachse (40) hintereinander angeordnet. Die Fahrgestellkomponenten (4) kann auch entfallen.

Das Landfahrzeug (1) ist ein z.B. Kraftfahrzeug, welches vorzugsweise einen Frontantrieb mit einer angetriebenen Vorderachse und Rädern aufweist. Das Fahrgestell (2) und insbesondere die Fahrgestellkomponente bzw. Moduleinheit (3) ist vorzugsweise eine Anbaueinheit für den nachträglichen Anbau an den in Figur 1 beispielhaft gezeigten Zugkopf (5). Der Zugkopf (5) und das Fahrgestell (2) können von verschiedenen Herstellern stammen. Die Moduleinheit (3) kann eine hintere Achsanordnung (7) des Fahrzeugs (1) aufnehmen.

Der Zugkopf (5) besteht aus einer Kabine mit Sitzen, Antriebsmotor, angetriebener Vorderachse, Lenkung und weiteren, für den Fahrbetrieb vorteilhaften oder erforderlichen Teilen. Dies kann z.B. ein Kraftstofftank, eine Auspuffanlage oder dergleichen sein. Der Zugkopf (5) kann ein eigenes Fahrgestell mit parallelen Längsträgern (6) aufweisen, die kurz hinter der Kabine enden. Die Kabine kann an der Rückseite offen oder geschlossen sein. Die Kabinenhülle kann auch entfallen (sog. Windläufer). Die Längsträger (6) können eine werkseitig bereits vorbereitete Länge haben. In einer anderen Ausführungsform können längere Längsträger, die z.B. Bestandteil eines kompletten hinteren Rahmens waren, kurz hinter der Kabine abgeschnitten werden.

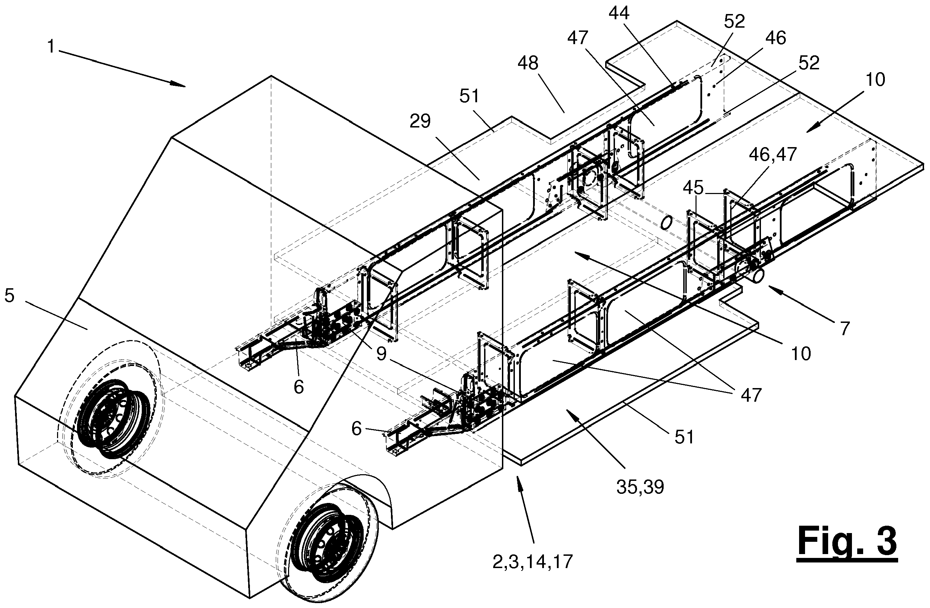

Die gezeigten Längsträger (6) können Bestandteil eines Einbauadapters gemäß der EP 1 634 798 A1 sein. Die Längsträger (6) können hierbei für den Anschluss eines tiefergelegten Fahrgestells (2) eine abgewinkelte bzw. nach unten versetzte Anbaustelle mit einem Hohlkastenprofil und Stirnanschlägen aufweisen. Figur 3 verdeutlicht diese bevorzugte Ausgestaltung. Alternativ kann ein Adapter gemäß der WO 00/37301 A1 eingesetzt werden.

Der Plattformverbund (17) weist eine obere Plattform (29) und eine untere Plattform (41) auf, die in der vertikalen Richtung voneinander distanziert sind, wobei sich im Zwischenraum Längsträger (44) befinden. Vorzugsweise sind zwei Längsträger (44) mit gerader Ausrichtung und Parallelanordnung vorhanden. Sie erstrecken sich bevorzugt über die gesamte Länge der Plattformen (29,41).

Die Plattformen (29,41) sind an der Unterseite und der Oberseite der Längsträger (44) angeordnet und sind an den Längsträgern (44) befestigt. Dies kann mittels abgewinkelter Stützbeschläge (50) geschehen. Die Längsträger (44) der Moduleinheit (3) sind frontseitig mit dem motorisierten Zugkopf (5) und insbesondere mit dessen Längsträgern (6) verbunden. Die Längsträger (44) nehmen auch die heckseitige Achsanordnung (7) des Fahrzeugs (1) auf.

Der Plattformverbund (17) weist eine oder mehrere integrierte Hohlkammer(n) (10,11,12,13) auf, die zwischen den Plattformen (29,41) ausgebildet ist/sind. Die Moduleinheit (3) bzw. der Plattformverbund (17) bildet mit den Hohlkammer(n) (10,11,12,13) einen Doppelboden im Fahrgestell (2).

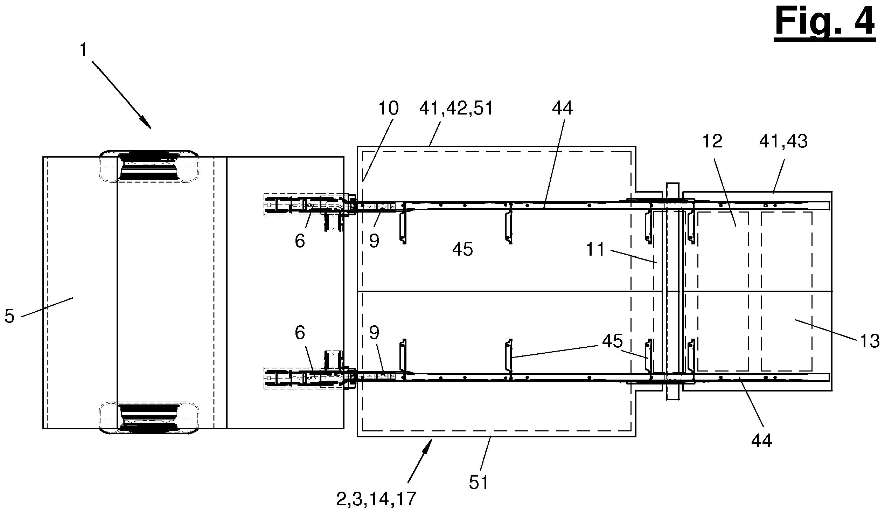

In Figur 4 ist ein Beispiel einer Anordnung und Verteilung von Hohlkammern (10,11,12,13) in Draufsicht auf die untere Plattform (41) angedeutet. Die integrierten Hohlkammer(n) (10,11,12,13) sind von außen her zugänglich. Hierfür gibt es verschiedene Möglichkeiten. Die Hohlkammer(n) (10) können an der Längsseite oder der Rückseite bzw. Heckseite des Fahrgestells (2) eine oder mehrere Zugangsöffnungen (35), ggf. mit einem lösbaren Verschluss (39), aufweisen.

Die Kammerhöhe wird gemäß Figur 1 durch die Höhe der Längsträger (44) bestimmt. Die Höhe der modulseitigen Längsträger (44) ist dabei größer als die Höhe der zugkopfseitigen Längsträger (6).

Der Plattformverbund (17) kann ferner einen oder mehrere Querträger (45) aufweisen, die mit den Längsträgern (44) und den Plattformen (29,41) verbunden sind. Die Längsträger und die Querträger (44,45) weisen im Wesentlichen die gleiche Höhe auf. Die Querträger (45) stützen zusätzlich die distanzierten Plattformen (29,41) ab und nehmen Schubkräfte auf. Sie stabilisieren außerdem die Längsträger (44) gegen Querkräfte und Biege- oder Beulverformungen. Insbesondere sind beidseits und nahe der Achsanordnung (7) Querträger (45) angeordnet. Figur 3 und 4 zeigen die Querträgeranordnungen.

Die Querträger (45) können einzeln oder mehrfach vorhanden sein. Sie können in unterschiedlicher Weise ausgebildet und angeordnet sein. Im gezeigten Ausführungsbeispiel sind die Querträger (45) zwischen den Längsträgern (44) angeordnet und sind als verkürzte Trägerstummel ausgebildet, die einander quer zur Fahrzeuglängsachse gegenüberliegen und zwischen sich einen Freiraum im Hohlkammerbereich lassen. Die Trägerstummel sind an der Innenseite der Längsträger (44) befestigt und sind gegeneinander gerichtet.

In einer anderen Ausführungsform können die Trägerstummel alternativ oder zusätzlich an der Außenseite der Längsträger (44) angeordnet sein und nach außen weisen. In einer anderen Variante kann statt Trägerstummeln ein durchgehender Querträger vorhanden sein, der sich über den Bereich zwischen den Längsträgern (44) erstreckt und ggf. auch nach außen über die Längsträger (44) vorsteht.

Der oder die Querträger (45) können gemäß Figur 4 zumindest partiell eine Unterteilung oder Trennung von Hohlkammern (10,11,12,13) zwischen den Plattformen (29,41) bilden.

Die Längsträger (44) und ggf. auch die Querträger (45) sind z.B. als profilierte dünnwandige Metallbleche mit einem aufrechten Trägersteg (46) und mit einem Quergurt (52) am unteren und/oder oberen Stegrand ausgebildet. Vorzugsweise handelt es sich um Stahlprofile. Die Längs- und Querträger (44,45) können z.B. als im Querschnitt C-, L- oder Z-förmige Blechbiegeteile ausgebildet sein.

Der Trägersteg (46) der Längsträger (44) und ggf. der Querträger oder Trägerstummel (45) kann eine oder mehrere Stegöffnungen (47) aufweisen. Diese können einen Zugang zu einem innenliegenden Hohlkammerbereich im Plattformverbund (17) bilden. Die Stegöffnungen (47) können im Stegmaterial durch geeignete Trenn- oder Schneidverfahren, z.B. Stanzen, Laserschneiden oder dgl., gebildet werden. Sie können an ein oder beiden axialen (40) Enden zur Spannungsreduzierung eine verjüngte bzw. weicher verrundete, insbesondere ovale Formgebung haben. An den zwischen den Stegöffnungen (47) verbleibenden aufrechten Stegbereichen können stabilisierende Verformungen, z.B. Sicken oder dgl. eingebracht sein. Figur 3 diese Ausgestaltungen.

Die Längsträger (44) und ggf. auch die Querträger (45) können alternativ aus einem anderen bevorzugt plattenartigen oder profilartigen Material, z.B. aus Kunststoff oder aus einem Verbundwerkstoff, bestehen und den besagten aufrechten Trägersteg (46) aufweisen. Ein Längsträger (44) und/oder ein Querträger (45) kann auch eine massive Wandung ohne Stegöffnung aufweisen.

Die Längsträger (44) der Moduleinheit (3) können an den Längsträgern (6) des Zugkopfes (5) in beliebig geeigneter Weise montiert werden. Im gezeigten und bevorzugten Ausführungsbeispiel weisen die Längsträger (44) in Fahrtrichtung (40) sich erstreckende profilierte Montagebeschläge (9) auf, die für eine bevorzugt formschlüssig Verbindung mit den Längsträgern (6) vorgesehen und adaptiert sind. Die Montagebeschläge (9) können z.B. gemäß Figur 1 als verformter Bereich eines Längsträgersstegs (46) ausgebildet sein. Die Verformungen können an Schraubstellen angeordnet und napfförmig mit Durchgangsöffnung für einen Schrauben- oder Bolzenschaft ausgebildet sein, wobei die zugkopfseitigen Längsträger (6) entsprechende Napfverformungen aufweisen. An den ineinander greifenden Napfverformungen, die z.B. in einer Matrix von vier, sechs oder mehr Befestigungsstellen angeordnet sind, können sich die Längsträger (6,44) formschlüssig aneinander zur Aufnahme der vertikalen und horizontalen Stützkräfte sowie der auftretenden Momente abstützen.

Die Montagebeschläge (9) können an den Längsträgern (44) in einer der gewünschten Fahrgestellhöhe entsprechenden Lage angeordnet sein. In der gezeigten Ausführungsform sind die zugkopfseitigen Längsträger (6) am freien Ende mit einem Höhenversatz nach unten versehen, der durch eine entsprechende Formgebung des Längsträgers (6) oder durch einen Anbauadapter erreicht werden kann. Der Höhenversatz ist zum Tieferlegen des Anbau-Fahrgestells (2) und des Modulteils (3) vorteilhaft. In einem solchen Fall kann der Montagebeschlag (9) am unteren Bereich der modulseitigen Längsträger (44) angeordnet sein. Falls die zugkopfseitigen Längsträger (6) nicht einen solchen Höhenversatz haben, kann der Montagebeschlag (9) weiter oben und mit Abstand vom unteren Rand am Längsträgersteg (46) angeordnet sein.

Der Montagebeschlag (9) kann alternativ oder zusätzlich zu den vorgenannten napfartigen Stegverformungen eine größere flächige seitliche Verformung aufweisen, die vorzugsweise zur Außenseite der Längsträger (44) gerichtet ist und die der Außenkontur des zugehörigen zukopfseitigen Längsträgers (6) entspricht. Durch eine solche Verformung kann eine Nut oder Tasche im Trägersteg (46) gebildet werden, welche den Längsträger (6) an der Oberseite und ggf. auch an der Unterseite übergreift und hierdurch ein formschlüssige Abstützung bildet.

In weiterer Abwandlung kann ein Montagebeschlag (9) außer den erwähnten Stegverformungen an den Längsträgern (44) ein oder mehrere zusätzliche Stützprofile zur Verbindung mit dem zukopfseitigen Längsträger (6) aufweisen.

Die Achsanordnung (7) ist an den Längsträgern (44) befestigt. Dies kann vorzugsweise lösbar mittels Schrauben geschehen. Hierfür weist die Achsanordnung (7) einen Achskörper (49) mit randseitigen Achsböcken (31) auf, die außenseitig an den Längsträgern (44), insbesondere an deren Trägerstegen (46) anliegen und hier befestigt werden. An den Befestigungsstellen können ebenfalls Scherkräfte aufnehmende und formschlüssige Abstützungen bildende napfförmige Verformungen am Trägersteg (46) und am Achsträger (31) vorhanden sein. Die Längsträger (44) weisen an der Montagestelle außerdem eine einbauchende Öffnung am unteren Rand zur Aufnahme eines Achskörpers (49) auf.

Ein Achskörper (49) kann je nach Achsenzahl einfach oder mehrfach vorhanden sein. In der gezeigten Ausführungsform ist eine Einzelachse mit nur einem Achskörper (49) vorgesehen. Alternativ ist eine Tandemachse oder eine Trippelachse möglich, wobei die Zahl der Achskörper (49) auch größer als 3 sein kann. Der Achskörper (49) besteht z.B. aus einem quer über das Fahrgestell (2) sich erstreckenden Achsrohr mit darin endseitig gelagerten Radschwinghebeln. Das Achsrohr kann unter Bildung von Längslenkern eine gerade Form haben. Es kann zur Bildung von Schräglenkern auch eine schräg abgewinkelte Gestalt besitzen. In einem Achsrohr können Federelement, z.B. Torsionsstäbe, Gummischnüre oder dergleichen vorhanden sein. An den endseitigen Radschwinghebel können Stoßdämpfer und weitere Federelemente vorhanden sein. Die Achsanordnung (7) kann eine beiliebige Federanordnung, z.B. auch eine Luftfederung, aufweisen. An den Radschwinghebeln sind endseitig die Radnaben mit Radbremsen und den Rädern (8) angeordnet.

Wie Figur 1 und 4 verdeutlichen, kann die untere Plattform (41) in Fahrtrichtung (40) getrennte Plattformbereiche (42,43) mit einem Zwischenraum (28) aufweisen, der zur Aufnahme einer Achsanordnung (7) und insbesondere eines oder mehrerer Achskörper (49) dient. Der Zwischenraum (28) korrespondiert auch mit der vorgenannten Öffnung an der Unterseite der Längsträger (44).

Der hintere Plattformbereich (43) kann alternativ entfallen. Für die Stabilitität des Fahrgestells (2) kann es genügen, wenn der Plattformverbund (17) mit oberen und unteren Plattformen (29,41) im vorderen Bereich der Moduleinheit (3) bis zur Achsanordnung (7) vorhanden ist.

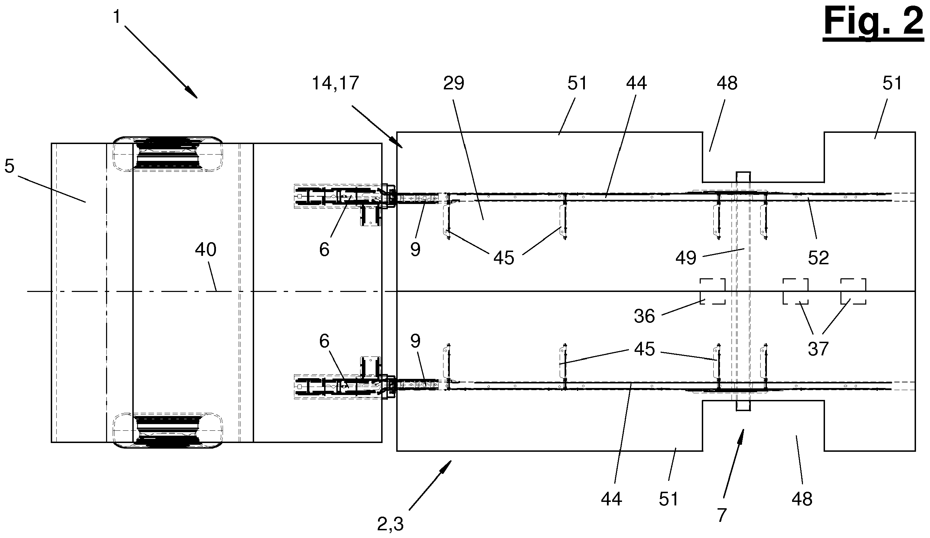

Figur 2 und 4 verdeutlichen ferner, dass die Plattformen (29,41) sowohl den Bereich zwischen den Längsträgern (44) bedecken, als auch an einer oder beiden Seiten zumindest bereichsweise über die Längsträger (44) hinausragen und einen seitlichen Überstand (51) bilden. An den in Fahrtrichtung (40) vor der Achsanordnung (7) gelegenen Modulbereichen sind obere und untere Überstände (51) vorhanden, die zwischen sich einen Hohlkammerbereich bilden. Dieser kann an der in Fahrtrichtung (40) gelegenen Vorderseite durch zusätzlich eingezogenen, ggf. isolierte Stirnwände (nicht dargestellt) verschlossen sein. Rückseitig kann ein Abschluss eine entsprechende Rückwand oder durch einen nicht dargestellten Kotflügel oder ein Radhaus erfolgen. Von den Seiten her ist der besagte Hohlkammerbereich durch eine oder mehrere seitliche Zugangsöffnungen (35) zugänglich, die ggf. mit einem nicht dargestellten Verschluss (39), z.B. einem Deckel oder einer Klappe, verschlossen werden können.

Die besagten Hohlkammerbereiche an der linken und rechten Fahrzeugseite können zusätzlich durch einen evtl. Querträger (45) in der Länge noch einmal unterteilt werden. Die seitlichen Hohlkammerbereiche könne außerdem durch die in diesem Bereich liegenden großen Stegöffnungen (47) mit einem zwischen den Längsträgern (44) befindlichen Hohlkammerbereich kommunizieren. Alterantiv kann hier auch eine Unterteilung oder Abtrennung verschiedener Hohlkammerbereiche erfolgen.

In dem in Fahrtrichtung (40) vor der Achsanordnung (7) gelegenen Bereich der Moduleinheit (3) kann eine Hohlkammer (10) gebildet werden, die z.B. als Stauraum nutzbar ist. Hierbei kann eine große zusammenhängende Hohlkammer (11) oder eine Unterteilung in verschiedene Hohlkammerbereiche mit unterschiedlichen und getrennt verschließbaren Zugangsöffnungen geschaffen werden.

Figur 2, 3 und 4 zeigen außerdem, dass die seitlichen Überstände (51) eine oder mehrere Ausnehmungen (48) aufweisen können. Z.B. haben die Überstände (51) an der oberen Plattform (29) im Bereich der Achsanordnung (7) eine solche Ausnehmung (48), die als Radausschnitt zur Aufnahme eines Kotflügels oder Radhauses dienen kann. In Fahrrichtung (40) davor und dahinter springt der Überstand (41) wieder nach außen vor.

Die untere Plattform (41) bzw. deren vorderer Plattformbereich (42) weist ebenfalls eine solche Ausnehmung (48) auf. Der hintere Plattformbereich (43) kann ebenfalls eine solche Ausnehmung (48) und einen daran anschließenden Überstand haben. In der gezeigten Ausführungsform hat der hintere Plattformbereich (43) eine verkürzte Breite ohne Überstand. Hierdurch wird unterhalb des Überstands (51) an der oberen Plattform (29) in diesem Bereich ein von unten und ggf. von der Seite her zugänglicher Hohlkammerabschnitt gebildet, in dem z.B. Gasflaschen oder dgl. aufgenommen werden können.

Der in Fahrtrichtung (40) hinter der Achsanordnung (7) liegende Hohlkammerbereich zwischen den Längsträgern (44) und evtl. ein angebauter Heckrahmen bzw. Heckmodulbereich (4) kann axial von der Rückseite her zugänglich sein, wobei sich eine Hohlkammerausbildung und eine Zugänglichkeit wie in der DE 41 33 401 A1 ergeben kann.

Die Plattformen (29,41) haben eine im wesentlichen ebene plattenartige Form. Sie können einteilig oder mehrteilig, z.B. wie gezeigt mittig längs geteilt, ausgebildet sein. Sie können als formsteife Platten mit einem isolierenden, insbesondere wärmeisolierenden Material ausgebildet sein. Die Plattenformen (29,41) können z.B. als mehrlagige Sandwichplatten mit Isolier- und Stützlagen ausgebildet sein. Die untere Plattform (41) kann außerdem an der Unterseite eine Schutzschicht aus Metall gegen Steinschlag oder dgl. aufweisen.

Die untere Plattform (41) kann eine bis auf den Zwischenraum (28) geschlossene Form haben und einen im wesentlichen geschlossenen Unterboden bilden. Das Eindringen von Wasser, Schmutz oder dergleichen in den oder die darüberliegenden Hohlkammerbereiche am Zwischenraum (28) kann durch eine dichtende Abdeckung des oder der Achskörper (49) erreicht werden.

Die vorerwähnte Hohlkammer (10) im vorderen Bereich der Moduleinheit (3) kann als Stauraum benutzt werden und entsprechend ausgebildet sein. Die besagten Querträger oder Trägerstummel (45) oder ggf. auch eingezogene Zwischenwände könne für eine bedarfsweise Kammerabtrennung sorgen.

Zwischen den Plattformen (29,41) könne außerdem ein oder mehrere Hohlkammern oder Hohlkammerbereiche (11,12,13) für anderer Zwecke ausgebildet sein. Eine Hohlkammer (11) kann als Aufnahmeraum für lose oder festeingebaute Gegenstände, z.B. Einbaugeräte, ausgebildet sein. Dies können Heizungs- und/oder Klimageräte sein. Eine solche Hohlkammer (11) kann z.B. im Bereich der Achsanordnung (7) oberhalb des oder der Achskörper (49) angeordnet bzw. ausgebildet sein.

Ferner kann eine oder mehrere Hohlkammern (12,13) oder Hohlkammerbereiche als Tank für ein Fluid, insbesondere für Frischwasser und/oder Abwasser, ausgebildet sein oder einen Tank aufnehmen. Eine solche Hohlkammer (12,13) kann ebenfalls im Bereich einer hinteren Achsanordnung (7) oder ggf. auch dahinter, insbesondere im Heckbereich (4), angeordnet sein.

Die Hohlkammer(n) (10,11,12,13) können eine oder mehrere Zugangsöffnungen (35,36,37) aufweisen. Dies könne die vorerwähnten seitlichen Zugangsöffnungen (35) mit Verschlüssen (39) sein. An der oberen Plattform (29) können ebenfalls Zugangsöffnungen (36,37) vorhanden sein. Dies kann z.B. eine Topöffnung (36) im Bereich der Hohlkammer (11) für die Einbaugeräte sein, die für die Zuführ- und Abführleitungen, für Energieversorgung, aber auch für Wartungszwecke vorgesehen und entsprechend ausgebildet sein kann. Für die zu Tankzwecken vorgesehenen Hohlkammern (12,13) kann an der oberen Plattform (29) ebenfalls ein Zugang (37) in Form eines Tankstutzens für die Zu- und Abfuhr der Fluide vorhanden sein. Zudem kann die obere Plattform (29) weitere Öffnungen für Inspektions- und Wartungszwecke oder dgl. aufweisen.

Im Heckbereich der Moduleinheit (3) und ggf. auch in einem angebauten oder integrierten Heckrahmen (4) kann eine Hohlkammer (10) als Stauraum vorhanden sein. Sie kann eine oder mehrere Zugangsöffnung(en) an der Längsseite oder der Rückseite bzw. Heckseite des Fahrgestells (2) aufweisen.

In den vorbeschriebenen Ausführungsformen liegen die Hohlkammern oder Hohlkammerbereiche (11,12,13) für Einbaugeräte, Tanks oder dgl. im Bereich zwischen Längsträgern (44). In einer alternativen Ausführungsform könne sie nach außen in den Bereich der Überstände (51) verlagert sein, wodurch zwischen den Längsträgern (44) ein ggf. durchgängig freier Hohlkammerbereich (10) als Stau- und Laderaum entsteht, der ggf. vom Heck her durch eine entsprechende Zugangsöffnung axial zugänglich ist. Im vorderen Modulbereich vor der Achsanordnung (7) können ein oder mehrere alternative oder zusätzliche seitliche Zugangsmöglichkeiten bestehen.

Die Hohlkammern oder Hohlkammerbereiche (11,12,13) für Einbaugeräte, Tanks oder dgl. können in einer weiteren Variante entfallen, so dass nur ein durchgehender oder unterteilter Lade- oder Stauraum (10) vorhanden ist.

In den verschiedenen vorgenannten Varianten kann bei einer als Lade- oder Stauraum ausgebildeten Hohlkammer (10) dank der großen Stegöffnung(en) (47) oder der Trägerstummel (45) eine Durchlademöglichkeit quer und/oder längs der Fahrzeuglängsachse (40) bestehen. Die erlaubt die Unterbringung größerer Gegenstände.

Der Plattformverbund (17) und insbesondere die obere Plattform (29) dient zur Aufnahme eines in Figur 1 schematisch angedeuteten Aufbaus (53) des Fahrzeugs (1). Dies kann z. B. eine Kabine mit Wohn-, Schlaf- und ggf. Sanitärbereichen sein. Alternativ kann der Aufbau (53) als Verkaufsraum, Präsentationsraum für ein Showmobil oder dergleichen ausgebildet sein.

Der Aufbau (53) kann direkt auf die obere Plattform (29) aufgesetzt sein, die dabei auch den Aufbauboden bildet. Alternativ kann ein Zwischenboden für den Aufbau (53) eingezogen sein, wobei der dazwischenliegende Raum für die Verlegung von Kabeln, Leitungen oder dergleichen vorgesehen ist. Eine solche Kabelverlegung kann alternativ auch an der Unterseite der oberen Plattform (29) erfolgen.

Das Fahrgestell (2) ist in der gezeigten Ausführung sehr tief gelegt, wobei die untere Plattform (41) die Mindest-Bodenfreiheit bietet. Durch die beträchtliche Höhe der Hohlkammer(n) (10,11,12,13) und der Längsträger (44) kann für den Zugang zu den oberhalb liegenden Aufbaubereichen eine Einstiegshilfe, z.B. in Form von Stufen, erforderlich sein. Eine solche Einstiegshilfe kann im Bereich eines seitlichen Überstands (51) an geeigneter Stelle untergebracht werden.

Abwandlungen der gezeigten und beschriebenen Ausführungsformen sind in verschiedener Weise möglich. Insbesondere könne die Merkmale der vorbeschriebenen Ausführungsvarianten beliebig miteinander kombiniert und ggf. ausgetauscht werden.

Die als Profilbleche ausgebildeten Längsträger (44) der Moduleinheit (3) können durch einen Rohrrahmen oder sog. Spaceframe (nicht dargestellt) mit großen Öffnungen gemäß der Stegöffnungen (47) zwischen den Rohren ersetzt werden. Bei dem Plattformverbund (17) können einzelne oder alle Querträger (45) durch einen oder mehrere stabilisierende Einbauten, z.B. eine formstabilen Tank, zwischen den Plattformen (29,41) ersetzt werden.

In Variation zu den Ausführungsbeispielen kann das Fahrzeug (1) als Anhänger ausgebildet sein, wobei der Plattformverbund (17) unter dem Anhängeraufbau angeordnet ist. Frontseitig können die Längsträger (44) mit einer Zugeinrichtung, z.B. einer starren oder dreh- bzw. schwenkbaren Zugdeichsel oder einer Sattelzugeinrichtung verbunden werden.

### BEZUGSZEICHENLISTE

- 1: Fahrzeug, Landfahrzeug
- 2: Fahrgestell, Chassis
- 3: Fahrgestellkomponente, Moduleinheit
- 4: Fahrgestellkomponente, Heckrahmen
- 5: Zugkopf
- 6: Längsträger
- 7: Achsanordnung
- 8: Rad
- 9: Montagebeschlag, Trägerprofil
- 10: Modul, Hohlkammer, Stauraum
- 11: Modul, Hohlkammer, Technikbereich
- 12: Modul, Hohlkammer, Tankbereich
- 13: Modul, Hohlkammer, Tankbereich
- 14: Verbundkonstruktion
- 15:
- 16:
- 17: Plattformverbund
- 18:
- 19:
- 20:
- 21:
- 22:
- 23:
- 24:
- 25:
- 26:
- 27:
- 28: Zwischenraum, Freiraum
- 29: Plattform, Tragplatte, oben
- 30:
- 31: Achsbock
- 32:
- 33: Rohrrahmen, Spaceframe
- 34:
- 35: Zugang, Seitenöffnung
- 36: Zugang, Topöffnung
- 37: Zugang, Tankstutzen
- 38:
- 39: Verschluss
- 40: Fahrtrichtung, Fahrzeuglängsachse
- 41: Plattform, Tragplatte, unten
- 42: Plattformbereich
- 43: Plattformbereich
- 44: Längsträger
- 45: Querträger, Trägerstummel
- 46: Trägersteg
- 47: Stegöffnung
- 48: Ausnehmung, Radausschnitt
- 49: Achskörper, Achsrohr
- 50: Stützbeschlag
- 51: Überstand seitlich
- 52: Quergurt
- 53: Aufbau

## Patentansprüche

1. Fahrgestell für Landfahrzeuge (1) mit Längsträgern (44), wobei das Fahrgestell (2) eine Fahrgestellkomponente aufweist, die als selbsttragende Moduleinheit (3) mit einer als Plattformverbund (17) ausgebildeten Verbundkonstruktion (14) und einer oder mehreren integrierten Hohlkammern (10,11,12,13) ausgeführt ist, wobei der Plattformverbund (17) eine obere und eine untere Plattform (29,41) aufweist, die durch die Längsträger (44) distanziert und versteift werden, **dadurch gekennzeichnet, dass** die Plattformen (29,41) seitlich zumindest bereichsweise über die Längsträger (44) hinausragen und einen seitlichen Überstand (51) bilden.

2. Fahrgestell nach Anspruch 1, **dadurch gekennzeichnet, dass** die Moduleinheit (3) eine hintere Achsanordnung (7) des Fahrzeugs (1) aufnimmt.

3. Fahrgestell nach Anspruch 1 oder 2, **dadurch gekennzeichnet, dass** die Plattformen (29,41) an der Unterseite und der Oberseite der Längsträger (44) angeordnet und an den Längsträgern (44) befestigt sind.

4. Fahrgestell nach Anspruch 1, 2 oder 3, **dadurch gekennzeichnet, dass** der Plattformverbund (17) einen oder mehrere Querträger (45) aufweist, die mit den Längsträgern (44) und den Plattformen (29,41) verbunden sind.

5. Fahrgestell nach Anspruch 4, **dadurch gekennzeichnet, dass** ein Längsträger (44) und/oder ein Querträger (44,45) einen aufrechten Trägersteg (46) mit einer Stegöffnung (47) aufweist, die einen Zugang zu einem inneren Hohlkammerbereich bildet.

6. Fahrgestell nach einem der vorhergehenden Ansprüche, **dadurch gekennzeichnet, dass** die Längsträger (44) in Fahrtrichtung (40) sich erstreckende profilierte Montagebeschläge (9) aufweisen, die zur bevorzugt formschlüssigen Verbindung mit Längsträgern (6) eines Zugkopfs (5) vorgesehen und adaptiert sind.

7. Fahrgestell nach Anspruch 6, **dadurch gekennzeichnet, dass** die Längsträger (44) der Moduleinheit (3) eine größere Steghöhe als die Längsträger (6) des Zugkopfs (5) aufweisen, wobei der Montagebeschläge (9) am unteren Bereich der Längsträger (44) angeordnet sind.

8. Fahrgestell nach einem der vorhergehenden Ansprüche, **dadurch gekennzeichnet, dass** die untere Plattform (41) getrennte Plattformbereiche (42,43) mit einem Zwischenraum (28) zur Aufnahme einer Achsanordnung (7) aufweist.

9. Fahrgestell nach einem der Ansprüche 2 bis 8, **dadurch gekennzeichnet, dass** die Achsanordnung (7) einen Achskörper (49) mit Achsböcken (31) aufweist, die an den Längsträgern (44) bevorzugt lösbar befestigt sind.

10. Fahrgestell nach einem der vorhergehenden Ansprüche, **dadurch gekennzeichnet, dass** die Plattformen (29,41) als formsteife Platten mit einem isolierenden Material, insbesondere als Sandwichplatten, ausgebildet ist.

11. Fahrgestell nach einem der vorhergehenden Ansprüche, **dadurch gekennzeichnet, dass** das Fahrgestell (2) mehrere in Fahrtrichtung (40) hintereinander angeordnete Fahrgestellkomponenten (3,4) aufweist, wobei ein Heckrahmen (4) an die Moduleinheit (3) angebaut oder in die Moduleinheit (3) integriert ist.

12. Fahrgestell nach einem der vorhergehenden Ansprüche, **dadurch gekennzeichnet, dass** eine Hohlkammer (10,11) als Aufnahmeraum für lose oder fest eingebaute Gegenstände, insbesondere Einbaugeräte, ausgebildet ist und/oder eine Hohlkammer (12,13) als Tank für ein Fluid, insbesondere für Frischwasser und/oder Abwasser, ausgebildet ist oder einen Tank aufnimmt.

13. Fahrgestell nach einem der vorhergehenden Ansprüche, **dadurch gekennzeichnet, dass** die Hohlkammer(n) (10) eine oder mehrere Zugangsöffnungen (35), ggf. mit einem Verschluss (39), an der Längsseite oder der Rückseite des Fahrgestells (2) aufweist/aufweisen.

14. Motorisiertes Landfahrzeug mit einem Fahrgestell (2), **dadurch gekennzeichnet, dass** das Fahrgestell (2) nach einem der Ansprüche 1 bis 13 ausgebildet ist.

15. Motorisiertes Landfahrzeug nach Anspruch 14, **dadurch gekennzeichnet, dass** ein Landfahrzeug (1) mit Frontantrieb einen motorisierten Zugkopf (5) und ein Fahrgestell (2) mit einer hinteren Achsanordnung (7) aufweist.

## Claims

1. Chassis for land vehicles (1) having side members (44), wherein the chassis (2) has a chassis component which is embodied as a self-supporting module unit (3) having a composite structure (14) in the form of a composite platform structure (17) and having one or more integrated hollow chambers (10, 11, 12, 13), wherein the composite platform structure (17) has an upper and a lower platform (29, 41) which are spaced apart and reinforced by the side members (44), **characterized in that** the platforms (29, 41) project laterally beyond the side members (44) at least regionally and form a lateral overhang (51).

2. Chassis according to Claim 1, **characterized in that** the module unit (3) receives a rear axle arrangement (7) of the vehicle (1).

3. Chassis according to Claim 1 or 2, **characterized in that** the platforms (29, 41) are arranged on the underside and the top side of the side members (44) and are fastened to the side members (44).

4. Chassis according to Claim 1, 2 or 3, **characterized in that** the composite platform structure (17) has one or more cross members (45) which are connected to the side members (44) and the platforms (29, 41).

5. Chassis according to Claim 4, **characterized in that** a side member (44) and/or a cross member (44, 45) forms an upright carrier web (46) having a web opening (47) which forms an access point to an inner hollow-cavity region.

6. Chassis according to one of the preceding claims, **characterized in that** the side members (44) have profiled mounting fittings (9) that extend in the direction of travel (40) and are intended and adapted for preferably form-fitting connection to side members (6) of a tractor head (5).

7. Chassis according to Claim 6, **characterized in that** the side members (44) of the module unit (3) have a greater web height than the side members (6) of the tractor head (5), wherein the mounting fittings (9) are arranged in the lower region of the side members (44).

8. Chassis according to one of the preceding claims, **characterized in that** the lower platform (41) has separate platform regions (42, 43) with an intermediate space (28) for receiving an axle arrangement (7).

9. Chassis according to one of Claims 2 to 8, **characterized in that** the axle arrangement (7) has an axle body (49) with axle blocks (31) which are fastened to the side members (44) preferably in a releasable manner.

10. Chassis according to one of the preceding claims, **characterized in that** the platforms (29, 41) are configured as dimensionally rigid panels having an insulating material, in particular as sandwich panels.

11. Chassis according to one of the preceding claims, **characterized in that** the chassis (2) has a plurality of chassis components (3, 4) that are arranged one after another in the direction of travel (40), wherein a rear frame (4) is attached to the module unit (3) or integrated into the module unit (3).

12. Chassis according to one of the preceding claims, **characterized in that** a hollow chamber (10, 11) is configured as a receiving space for loosely or fixedly installed objects, in particular built-in devices, and/or a hollow chamber (12, 13) is configured as a tank for a fluid, in particular for fresh water and/or wastewater, or receives a tank.

13. Chassis according to one of the preceding claims, **characterized in that** the hollow chamber(s) (10) has/have one or more access openings (35), optionally with a closure (39), on the longitudinal side or the rear side of the chassis (2).

14. Motorized land vehicle having a chassis (2), **characterized in that** the chassis (2) is configured according to one of Claims 1 to 13.

15. Motorized land vehicle according to Claim 14, **characterized in that** a front-wheel-drive land vehicle (1) has a motorized tractor head (5) and a chassis (2) having a rear axle arrangement (7).

## Revendications

1. Châssis de véhicule pour véhicules terrestres (1) comprenant des longerons (44), le châssis de véhicule (2) présentant un composant de châssis de véhicule qui est réalisé sous forme d'unité modulaire autoportante (3) avec une construction composite (14) réalisée en tant qu'assemblage de plates-formes (17) et une ou plusieurs chambres creuses intégrées (10, 11, 12, 13), l'assemblage de plates-formes (17) présentant une plate-forme supérieure et une plate-forme inférieure (29, 41) qui sont espacées et renforcées par les longerons (44), **caractérisé en ce que** les plates-formes (29, 41) font saillie latéralement au moins en partie au-delà des longerons (44) et forment un surplomb latéral (51).

2. Châssis de véhicule selon la revendication 1, **caractérisé en ce que** l'unité modulaire (3) reçoit un agencement d'essieu arrière (7) du véhicule (1).

3. Châssis de véhicule selon la revendication 1 ou 2, **caractérisé en ce que** les plates-formes (29, 41) sont disposées sur le côté inférieur et le côté supérieur des longerons (44) et sont fixées aux longerons (44).

4. Châssis de véhicule selon la revendication 1, 2 ou 3, **caractérisé en ce que** l'assemblage de plates-formes (17) présente une ou plusieurs traverses (45) qui sont raccordées aux longerons (44) et aux plates-formes (29, 41).

5. Châssis de véhicule selon la revendication 4, **caractérisé en ce qu'**un longeron (44) et/ou une traverse (44, 45) présentent une nervure de support dressée (46) avec une ouverture de nervure (47) qui constitue un accès à une région intérieure de la chambre creuse.

6. Châssis de véhicule selon l'une quelconque des revendications précédentes, **caractérisé en ce que** les longerons (44) présentent des ferrures de montage profilées (9) s'étendant dans la direction de conduite (40), qui sont prévues et adaptées en vue d'une connexion de préférence par engagement par correspondance de formes avec des longerons (6) d'une tête de traction (5).

7. Châssis de véhicule selon la revendication 6, **caractérisé en ce que** les longerons (44) de l'unité modulaire (3) présentent une plus grande hauteur de nervure que les longerons (6) de la tête de traction (5), les ferrures de montage (9) étant disposées au niveau de la région inférieure des longerons (44).

8. Châssis de véhicule selon l'une quelconque des revendications précédentes, **caractérisé en ce que** la plate-forme inférieure (41) présente des régions de plates-forme séparées (42, 43) avec un espace intermédiaire (28) pour recevoir un agencement d'essieu (7).

9. Châssis de véhicule selon l'une quelconque des revendications 2 à 8, **caractérisé en ce que** l'agencement d'essieu (7) présente un corps d'essieu (49) avec des chevalets d'essieu (31) qui sont fixés de préférence de manière amovible sur les longerons (44).

10. Châssis de véhicule selon l'une quelconque des revendications précédentes, **caractérisé en ce que** les plates-formes (29, 41) sont réalisées sous forme de plaques de forme rigide avec un matériau isolant, en particulier sous forme de plaques en sandwich.

11. Châssis de véhicule selon l'une quelconque des revendications précédentes, **caractérisé en ce que** le châssis de véhicule (2) présente plusieurs composants de châssis de véhicule (3, 4) disposés les uns derrière les autres dans la direction de conduite (40), un cadre arrière (4) étant monté sur l'unité modulaire (3) ou étant intégré dans l'unité modulaire (3).

12. Châssis de véhicule selon l'une quelconque des revendications précédentes, **caractérisé en ce qu'**une chambre creuse (10, 11) est réalisée sous forme d'espace de réception pour des objets libres ou encastrés fixement, en particulier des appareils encastrés et/ou une chambre creuse (12, 13) est réalisée en tant que réservoir pour un fluide, en particulier pour de l'eau fraîche et/ou de l'eau d'écoulement ou reçoit un réservoir.

13. Châssis de véhicule selon l'une quelconque des revendications précédentes, **caractérisé en ce que** la ou les chambre(s) creuse(s) (10) présente (nt) une ou plusieurs ouvertures d'accès (35), éventuellement avec une fermeture (39) au niveau du côté longitudinal ou du côté arrière du châssis de véhicule (2).

14. Véhicule terrestre motorisé comprenant un châssis de véhicule (2), **caractérisé en ce que** le châssis de véhicule (2) est réalisé selon l'une quelconque des revendications 1 à 13.

15. Véhicule terrestre motorisé selon la revendication 14, **caractérisé en ce qu'**un véhicule terrestre (1) à traction avant présente une tête de traction motorisée (5) et un châssis de véhicule (2) avec un agencement d'essieu arrière (7).
